# EUROPEAN PATENT APPLICATION

(11) **EP 0 921 107 A1**
(43) Date of publication of application: **09.06.1999**
(21) Application number: 98402923.1
(22) Date of filing: 24.11.1998
(51) Int. Cl.: C04B 28/08, B28B 7/46

(54) **Mixture for producing glass fibre-reinforced concrete mouldings and process and equipment for producing such mouldings**

(30) Priority: 24.11.1997 DE 19752045
(71) Applicant: MATERIAUX DE CONSTRUCTION INTERNATIONAL (M.C.I. S.A.), F-92400 Courbevoie (FR)
(72) Inventor: Pachow, Ulrich, Dr., 40470 Düsseldorf (DE)
(74) Representative: Muller, René

(57) **Abstract**

The present invention relates to a mixture for producing glass fibre-reinforced concrete mouldings, which consists of :

| | |
|---|---|
| Cement | 100 kg |
| Sand | from 0 to 20 kg |
| Rock flour | from 0 to 30 kg |
| Fine sand | from 10 to 30 kg |
| Water | from 80 to 130 kg |
| Polymer fibres | from 0.5 to 2.5 kg |
| Plastic wadding | from 0.5 to 2.0 kg |
| Glass fibres | |
| (10-20 mm long) | from 2.0 to 5.0 kg |
| Retention agent | from 7 to 25 kg |

and the processes and equipment for producing such mouldings.

## Description

The present invention relates to a new composition for producing mouldings from glass fibre-reinforced concrete and to production processes and equipment adapted to the novel formulation.

The production of thin-walled mouldings as required, for example, for the ridges of roofs from fibre-reinforced concrete is known. Since the processes, which initially were carried out solely by hand, are very costly and time-consuming, new production processes were developed as long as about two decades ago. These included above all the injection process, in which a finished mixture is first of all prepared from cement, water, reinforcing fibres and aggregates. This slurry mixture is injected into the mould, dewatered, and laid into support shuttering in order to harden.

This process worked well with the asbestos fibres used initially for reinforcement. After asbestos had been banned in the construction industry, trials were carried out with cellulose and polymer fibres as a replacement. In the course of these trials it was found that the resultant mouldings were very low in strength. Consequently, if parts exposed to outdoor weathering manage not to fracture during their transportation to the construction site or in the course of fitting, they very frequently exhibit cracks after a relatively short time, in the course of natural weathering, deformation or as a result of frost. The reasons for such cracking are the relatively short fibre lengths, generally <6 mm, the low strength of cellulose and polymer fibres, the low Young's modulus of the fibres employed relative to the cement-bound matrix, and the unfavourable weathering properties of the cellulose fibres, which are employed in a relatively large amount.

This set of problems led to calls for a new kind of mixture whose essential constituent is glass fibres with a length of 10-20 mm. The fibre length has a critical influence on the flexural tensile strength, deformation resistance and impact strength. On the other hand, longer fibres often lead to blockage of the lines from the mixture reservoir vessel to the mould and so hinder continuous production. The aim of the invention is to develop a mixture composition which uses glass fibres with a length of 10-20 mm, which prevents blockage and so permits continuous production.

Another problem to be avoided is that of the emergence of cement from the moulding in the course of the pressing operation or in the course of dewatering. One possibility is to add relatively large amounts of natural cellulose, whose individual fibres possess a very high specific surface area. Cellulose, however, has the disadvantage that it swells on absorption of water and, in so increasing its volume, leads to stresses within the material. The consequences are low strengths and susceptibility to cracking, or indeed cracks, in the finished product.

The object was therefore to find a novel cement/glass fibre mixture which permits the production of mouldings of high flexural tensile strength and impact strength, from which little or none of the cement is forced out in the course of dewatering, and which, in addition, possesses high stability to the effects of weathering.

This object is achieved by the features set out in the main claim and assisted by the features of the subclaims.

EP 0 494 920 discloses a cement matrix for manufacturing glass fibre reinforced cement or concrete, which is used in particular for producing flat slabs. The mixture consists of Portland cement, blast-furnace slag, sand and, for binding of the calcium hydroxide released during the hydration, a sufficient amount of aggregate comprising fly ash, reactive silicon dioxide, metakaolin, diatomaceous earth and/or pozzolana. The glass fibre reinforced concrete is produced by introducing the cement matrix and glass fibres, in the form or layers, into a mould, the glass fibres either being laid on as split glass fibre roving (glass fibre strand) or applied by means of a fibre spray lay-up technique. However, three-dimensional construction parts with a uniform layer thickness cannot be produced by this means.

Surprisingly, however, a matrix comprising cement, sand, rock flour or limestone, fine sand and water can be mixed with long glass fibres and used for moulding by the injection process if a small quantity of polymer fibres and plastic wadding fibres, and a retention agent for the cement, are added to this mixture.

Surprisingly, in spite of the long glass fibres, such mixtures not only can be mixed without problems and introduced into the injection mould via corresponding lines but also provide adequate retention of the pulverulent materials when the excess injection water is being forced out, so giving a solid matrix. During the operation of forcing out the water it is advantageous here to stretch a three-dimensionally deformable latex fabric layer over the discharge screen.

The mixture of the invention comprises the following additions per 100 kg of cement:
- Sand from 0 to 20 kg
- Rock flour (limestone) from 0 to 30 kg
- Fine sand from 10 to 30 kg
- Water from 80 to 130 kg
- Polymer fibres from 0.5 to 2.5 kg
- Plastic wadding from 0.5 to 2.0 kg
- Glass fibres (10-20 mm long) from 2.0 to 5.0 kg
- Retention agent from 7 to 25 kg

The cement used is preferably a blast-furnace cement of low calcium hydroxide content, since if this is the case it is possible to add smaller amounts of reactive silicon oxides or hydroxide-binding silicates.

To facilitate suspension and aid transport through the lines, the sand used should have a grain size of from 0 to 2000 µm, preferably from approximately 100 to 1000 µm for the fine sand and from 0 to 100 µm for the limestone, on average.

The fine sand used is preferably reactive silicon dioxide as obtained from flue gases of the smelting furnaces in the manufacture of silicon and ferrosilicon, although it is also possible to use other calcium hydroxide-binding silicates or reactive silicas, such as diatomaceous earth, metakaolinite or pozzolana. The amount of these substances that is chosen should be sufficient at least to bind the calcium hydroxide formed during the hydration of the cement. Furthermore, these finely divided constituents (grain size preferably from 1 to 50 µm) additionally increase the strength of the cement matrix.

Polymer fibres employed are preferably alkali-resistant polymers, such as polyacrylonitrile, polypropylene, polyvinyl alcohol, polyethylene or polyamides, preference being given to polyacrylonitrile on account not only of its strength but also of its polarity, which is advantageous for additional cement adsorption. The fibres are employed in a length of from 3 to 10 mm, preferably from 4 to 5 mm, with fibre thicknesses of between 20 and 100 µm.

The plastic wadding used consists preferably of the same synthetic fibre materials, having a fibre thickness of 1-30 µm. Particular preference is given to a synthetic wadding of polyethylene fibres which are blown in a thickness of from 1 to 10 µm.

The glass fibres used are preferably alkali-resistant fibres, preferably the commercial AR glass fibres, which contain zirconium oxide (or zirconia) as an additive in order to reduce the alkaline attack. Glass fibres of this kind are manufactured as spun roving with diameters from 10 to 20 µm and are subsequently cut to length. In accordance with the invention it is preferred to employ fibres having a diameter of 10 to 20 µm, the fibres being cut to lengths of from 5 to 20 mm, and, in particular, fibre mixtures having lengths of, for example, 12 and 18 mm being employed. Addition of fibres with a length of 6 mm may also be appropriate for a particularly uniform composition of the mixture. Before being brought together into yarns, the individual fibres are usually coated with a water-insoluble size which facilitates dispersion into individual fibres within the cement mixture. Fibres of this kind are customary in commerce as an additive for glass fibre-reinforced concrete.

The retention agents used are polyelectrolytes which promote the adsorption of the cement particles on the fibres and their agglomeration with one another. Polyacrylates with weakly anionic charge have proved to be particularly suitable, such polyacrylates also being customary as flocculants in wastewater technology.

The mixture of the invention is processed on customary units for the production of fibrated concrete elements, as are described, for example, in European Patent Application 0 459 270 A2. The great ease of processing of the mixture of the invention makes it possible in particular even to produce forms of complex shape, as are required for edge pieces, connecting pieces or the like.

Production takes place in a customary manner, by pressing the mixture - homogenized in appropriate mixing devices - through lines into the moulds, after which the mould is closed and excess water is forced out through the screen base by means of pressure. In deviation from the customary process, an additional filter layer comprising a three-dimensionally deformable latex fabric can be placed over the screen base, this layer laying itself flat against the screen surface under the applied pressure and additionally preventing the escape of cement particles. Latex fabric of this kind is widely employed, for example in the manufacture of swimwear, etc. Its low water absorption and smooth surface structure permit ready detachment of the filter from the finished moulding, so that the filter layer can be used a large number of times before wearing down to the extent that it needs replacing. Furthermore, this also significantly increases the service lives of the screens.

The examples below give some representative embodiments of the invention.

| Ex. No. | 1 | 2 | 3 | 4 | 5 | 6 | 7 |
|---|---|---|---|---|---|---|---|
| Cement | 97 | 107 | 180 | 107 | 107 | 100 | 100 |
| Sand | 10 | 27 | 10 | 20 | 10 | 16.5 | 0 |
| Rock flour | 20 | 10 | 10 | 10 | 27 | 0 | 23.5 |
| Fine sand | 17 | 22 | 26 | 22 | 22 | 17.4 | 11.3 |
| Water | 120 | 130 | 135 | 135 | 110 | 90.4 | 88.3 |
| Polymer fibres | 2 | 0.1 | 0.5 | 0.5 | 0.5 | 1.3 | 1.3 |
| Plastic wadding | 2 | 0.1 | 1.5 | 1.6 | 1.5 | 1.3 | 1.3 |
| Glass fibres | 0.5 | 6 | 4 | 7 | 6.2 | 2.17 | 2.17 |
| Retention agent | 17 | 23 | 25 | 20 | 19 | 17.4 | 8.7 |

All figures are proportions by mass

## Claims

1. Mixture for producing mouldings from glass fibre-reinforced concrete, **characterized by** the following composition:
| | |
|---|---|
| Cement | 100 kg |
| Sand | from 0 to 20 kg |
| Rock flour | from 0 to 30 kg |
| Fine sand | from 10 to 30 kg |
| Water | from 80 to 130 kg |
| Polymer fibres | from 0.5 to 2.5 kg |
| Plastic wadding | from 0.5 to 2.0 kg |
| Glass fibres (10-20 mm long) | from 2.0 to 5.0 kg |
| Retention agent | from 7 to 25 kg |

2. Mixture according to Claim 1, **characterized in that** fibres of various materials - preferably polyethylene, polypropylene, polyvinyl alcohol, polyacrylonitrile and glass fibres - are used.

3. Mixture according to Claim 1 or 2, **characterized in that** fibres of different lengths from 0.1-20 mm are used and permit fine to coarse reinforcement.

4. Mixture according to Claims 1 to 3, **characterized in that** the cement is a cement of low calcium hydroxide content, especially a blast-furnace cement.

5. Mixture according to one or more of Claims 1 to 4, **characterized in that** the fine sand and the added rock flour or powdered limestone have grain sizes of 0 to 2000 µm, preferably from approximately 100 to 1000 µm for the fine sand and from 0 to 100 µm for the limestone.

6. Mixture according to one or more of Claims 1 to 5, **characterized in that** the fine sand is a reactive silicon dioxide from flue gases, fly ash, metakaolinite, diatomaceous earth or pozzolana.

7. Mixture according to one or more of Claims 1 to 6, **characterized in that** polymer fibres employed are polyacrylonitrile, polypropylene, polyvinyl alcohols, polyamide or polyolefin fibres.

8. Mixture according to one or more of Claims 1 to 7, **characterized in that** polymer wadding employed is a polyethylene wadding having a fibre thickness from 1 to 10 µm.

9. Mixture according to one or more of Claims 1 to 9, **characterized in that** the glass fibres consist of alkali-resistant glass and have a fibre diameter of from 10 to 20 µm and a fibre length of from 10 to 20 mm.

10. Mixture according to one or more of Claims 1 to 9, **characterized in that** retention agents used are polyelectrolytes, preferably a weakly anionic polyacrylate.

11. Process for producing mouldings by the injection process, in which a finished mixture according to one of Claims 1 to 10 is injected into an appropriate mould and dewatered and the green moulding is placed in support shuttering to harden, **characterized in that** in the course of dewatering a filter cloth comprising a three-dimensionally deformable latex fabric is placed on the discharge screen.

12. Equipment for producing mouldings from glass fibre-reinforced concrete, consisting of a conventional injection moulding unit, **characterized in that** dewatering takes place by way of a three-dimensionally deformable latex fabric placed on the screen base.
